## Europäisches Patentamt
## European Patent Office
## Office européen des brevets

(19)

(11) Publication number: **0 198 809**
**A2**

(12)

# EUROPEAN PATENT APPLICATION

(21) Application number: **86850121.4**

(22) Date of filing: **10.04.86**

(51) Int. Cl.⁴: **E 21 B 17/00**

(30) Priority: **16.04.85 SE 8501842**

(43) Date of publication of application: **22.10.86**
**Bulletin 86/43**

(84) Designated Contracting States: **AT DE FR GB SE**

(71) Applicant: **Atlas Copco Aktiebolag, Nacka,**
**S-105 23 Stockholm (SE)**

(72) Inventor: **Andersson, Kurt, Skälsätravägen 7,**
**S-135 54 Tyresö (SE)**

(74) Representative: **Eriksson, Kjell, Sandvik AB Patent**
**Department, S-811 81 Sandviken (SE)**

(54) **Rock drilling device and a drill stem for said device.**

(57) A rock drilling machine (11) is generating strokes to a drill stem by a thread connection. The adapter (12) has a bronze lining (20) that constitutes a female thread. The bronze lining (20) increases the life of the thread connection and is also detachable. Coupling sleeves (30) for an extension rod equipment can have similar bronze linings (20) as well as the drill bit.

Rock drilling device and a drill stem for said device

The present invention relates to a rock drilling device comprising a percussive rock drilling machine having a drill stem adapter that projects from the machine and has a detachable thread connection with the drill stem, said adapter and drill stem being made out of steel.

The invention also relates to a drill stem for a percussive rock drilling machine and to a coupling sleeve for such a drill stem.

Percussive rock drilling machines having relatively high power has usually an adapter. A drill string is screwed into the adapter. The drill string can consist of one single drill steel having a drill bit at one end. This is the conventional arrangement for tunnelling. The drill bit can be screwed to the steel or integrated with the same. When drilling longer holes extension rods are used that are connected by a thread coupling to a drill string having a drill bit screwed to the foremost rod. When the percussion power is higher than a certain level the length of life for the adapter coupling and also the other couplings decreases dramatically if the percussion power increases.

The reason for decreasing length of life is that pittings occur on the threads due to the fact that they are not always as tightened as is desired. The new hydraulic percussive rock drilling machines work at a very high frequence. The drill bit is subjected to friction forces that tend to prevent said drill bit from rotating. Since said friction forces are substantially independent of the striking frequency there is a tendency that the thread connections unscrew when using high frequency drilling machines.

The aim of the invention is to increase the length of life for said couplings.

The invention will be described more in detail by reference to the enclosed drawings.

Fig. 1 discloses a rock drilling machine mounted on a feed beam. The rock drilling machine has a drill stem adapter.

Fig. 2 is a side view, partly in section, of the adapter of the rock drilling machine according to Fig. 1.

Fig. 3 is a longitudinal section of a coupling sleeve for a drill stem.

Fig. 4 is a side view of one end of an extension rod.

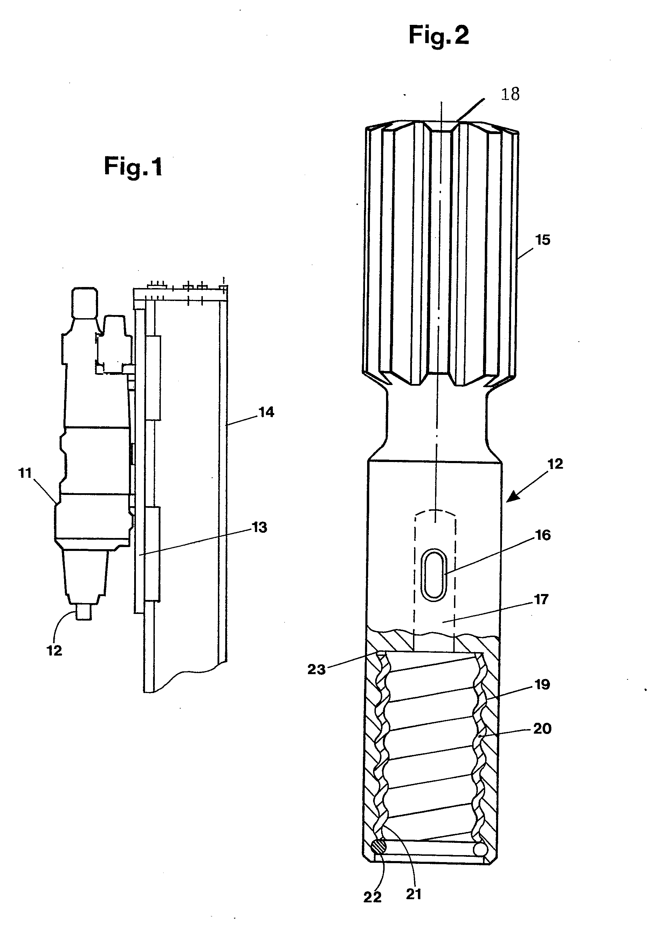

Fig. 1 discloses a percussive rock drilling machine 11. From the front portion of said machine 11 an adapter 12 projects.

The drilling machine 11 is in a conventional way mounted on a movable cradle 13 that is mechanically driven along a feed beam 14. As is shown in Fig. 2 the adapter 12 in a conventional way has a splined part 15 that is intended to be in engagement with a drill chuck that rotates the adapter 12. A certain axial movement between the drill chuck and the adapter is permitted. The adapter 12 has a side opening 16 to a central boring 17. A swivel in the machine supplies flush medium, usually water or air, to said side opening 16. The percussion piston (not shown) of the machine is provided to strike the rear end face 18 of the adapter.

The adapter 12 is manufactured from hardened steel and has a frontal female thread 19. A lining 20 of bronze can be screwed into said female thread 19. The lining has an inner thread 21.

The rear threaded portion of the drill stem can be screwed into the inner thread 21. Also the drill string is manufactured from hardened steel. The lining is fixed in axial direction by a lock ring 22 received in a groove. The ring 22 will protect the end of the lining from being upset. A recess 23 in the end face of the lining 20 permits flush medium to leak to the outside of the lining and outwards along the thread.

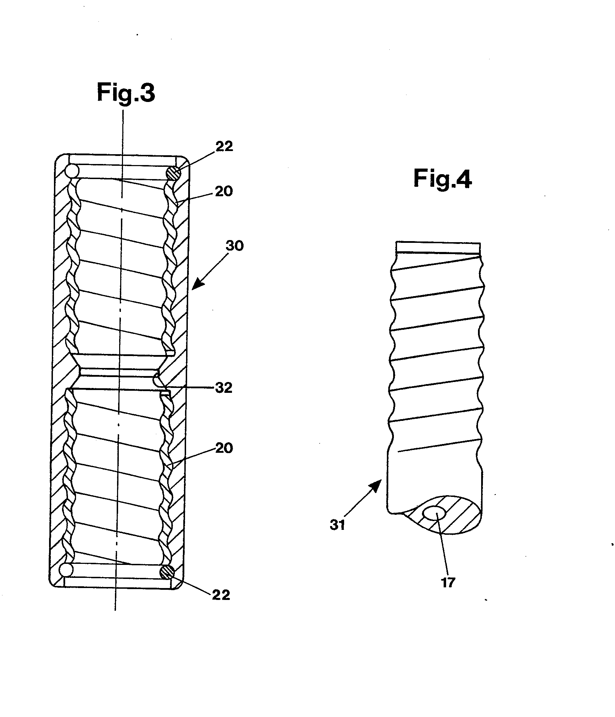

In Fig. 3 is disclosed a coupling sleeve 30 that can connect two extension rods, each having a male thread. One end of an extension rod of hardened steel is disclosed in Fig. 4. The extension rods are symmetrical and have a male thread at both ends. The coupling sleeve 30 comprises a stop 32 located in the middle of the sleeve. One of the extension rods can bear against said stop 32. The extension rods must have end to end contact. Therefore both extension rods must not bear against the stop 32. The ends of the extension rods therefore have a reduced diameter as is shown in Fig. 4. The coupling sleeve 30 has a lining 20 and rings 22 that are indentical with those disclosed in Fig. 2. The end of the extension rod disclosed in Fig. 4 also fits to the adapter of Fig. 2.

Although not disclosed in the Figures the bronze lining can also be used in a thread connection between a drill bit and a drill rod.

The lining 20 preferably has outer and inner threads that are related to each other in such a way that the linings have substantially the same wall thickness in every part as disclosed in the Figures. However, the linings can also be fixed in another way than by a thread and a ring.

The bronze lining has a very positive effect on the thread connection. Thus the thread connection can work less tightened and still not being damaged. The bronze lining functions as a kind of lubrication in the thread connection, still the bronze lining is resistant to wearing.

Claims

1. Rock drilling device comprising a percussive rock drilling machine (11) having a drill stem adapter (12) that projects from the machine and has a detachable thread connection with the drill stem, both the adapter and the drill stem being made of steel, c h a r a c t e r i z e d  in that the detachable thread connection has a first part (31) having a thread formed directly in the steel and a second part (12) having a thread in a lining (20) that is interchangably secured in said second part (12), said lining (20) being made from a material softer than steel.

2. Rock drilling device according to claim 1, c h a r a c t e - r i z e d  in that the lining (20) is constituting the female thread of the thread connection.

3. Rock drilling device according to claim 2, c h a r a c t e - r i z e d  in that the lining (20) also has an external thread for connection to said second part (12).

4. Rock drilling device according to anyone of the previous claims, c h a r a c t e r i z e d  in that the lining (20) is connected to the adapter (12 ).

5. Rock drilling device according to anyone of the previous claims, c h a r a c t e r i z e d  in that the lining is made out of bronze.

6. Drill stem for a percussive drilling machine consisting of a number of coupled extension rods (31) of steel, c h a r a c - t e r i z e d  in that the thread connections consist of a first part (31) having a thread formed directly in steel and a second part (12 ,30) having a thread in a lining (20) of softer material than steel, said lining (20) being interchangably secured in said second part (12,30).

7. Drill stem for a percussive rock drilling machine having at least one drill rod of steel and a drill bit connected to the drill rod by a thread connection, c h a r a c t e r i z e d in that the thread connection consists of a first part having a thread formed directly in steel and a second part having a thread in a lining of softer material than steel, said lining being interchangably secured in said second part.

8. Coupling sleeve for a drill stem, said coupling sleeve (30) having a thread in two directions and an intermediate stop (32), c h a r a c t e r i z e d in that the threads are provided in interchangable linings (20) that are secured in said coupling sleeve.

9. Coupling sleeve according to claim 7, c h a r a c t e r i z - e d in that the linings (20) are screwed into coupling sleeves and locked by rings (22) received in grooves.

10. Coupling sleeve according to anyone of claim 7 to 9, c h a r a c t e r i z e d in that the linings are made out of bronze.

**Fig.1**

**Fig.2**

0198809

**Fig.3**

**Fig.4**